# EUROPÄISCHE PATENTSCHRIFT

(11) **EP 1 700 763 B1**
(45) Veröffentlichungstag und Bekanntmachung des Hinweises auf die Patenterteilung: **23.07.2008**
(21) Anmeldenummer: 06001488.3
(22) Anmeldetag: 25.01.2006
(51) Int. Cl.: B61D 19/02, B61K 13/04, E05F 15/00

(54) **System zur Absicherung von mit Türen verschliessbaren Personeneinstiegsöffnungen an Fahrzeugen zur Personenbeförderung**
System for securing door closed access openings on passenger transport vehicles
Système de protection d'ouvertures d'accès fermées par portes sur véhicules de transport de passagers

(30) Priorität: 11.03.2005 DE 102005011684
(43) Veröffentlichungstag der Anmeldung: 13.09.2006
(73) Patentinhaber: SICK AG, 79183 Waldkirch (DE)
(72) Erfinder: Weber, Harald, 77855 Achem (DE); Wienk, Thomas, 22417 Hamburg (DE)
(74) Vertreter: Ludewigt, Christoph

(56) Entgegenhaltungen:
- DE-A1- 4 004 529
- JP-A- 7 220 188
- US-A- 5 410 149
- US-B1- 6 341 563

## Beschreibung

Die Erfindung betrifft ein System zur Absicherung von mit Türen verschließbaren Personeneinstiegsöffnungen an Fahrzeugen zur Personenbeförderung, insbesondere Schienenfahrzeugen, gemäß dem Oberbegriff des Anspruchs 1.

Aus der JP 07-220188 A ist ein gattungsgemäßes System bekannt. Bei diesem sind oberhalb jeder mit Türen verschließbaren Einstiegsöffnung eines Zuges jeweils ein Sensor angeordnet, mit dem infrarote Strahlung detektierbar ist. Der Sensor weist dabei lediglich einen Empfänger für die infrarote Strahlung auf, wobei mittels einer optischen Anordnung der Empfänger derart ausgelegt ist, dass er Strahlung aus einem ersten fächerförmigen Empfangsbereich, der sich in etwa parallel zu den Türen auf einer Außenseite des Fahrzeugs erstreckt und aus einem zweiten fächerförmigen Empfangsbereich, der gegenüber dem ersten Empfangsbereich in einem Winkel gekippt ist, empfangen kann. Damit sollen Personen und Gegenstände erkannt werden, die sich noch im Bereich der Fahrzeugtüren befinden, um gegebenenfalls die Abfahrt des Zuges zu stoppen, damit keine Gefahrensituation entsteht. Denkbare Fälle, in denen Gefahrensituationen entstehen könnten, wären beispielsweise wenn sehr nahe an den Fahrzeugtüren sich noch eine Person befindet oder wenn beispielsweise ein Gegenstand oder gar ein Körperteil in den Fahrzeugtüren eingeklemmt ist. Um diese Situation zu vermeiden, sind jedem Sensor die beiden Überwachungsbereiche zugeordnet, damit sowohl unmittelbar an der Fahrzeugtür eine Überwachung stattfindet als auch in einem gewissen Abstand davon, beispielsweise auf der Bahnsteigkante. Damit aber die Gegenstände bzw. Personen infrarote Strahlung abgeben können, die der Sensor detektieren kann, ist ein Strahlungssensor vorgesehen, der von einer Bedienperson auf dem Bahnsteig betätigt wird. Dies ist aufwendig und bedarf zusätzlicher Handhabung und Personal außerhalb des Fahrzeugs auf dem Bahnsteig. Weiter nachteilig ist, dass aufgrund des externen Senders, der in einem anderen Blickwinkel zu den zu detektierenden Objekten und Personen steht, die Gefahr besteht, dass die von dem Sender angestrahlten Objekte nicht vom Sensor erfasst werden, weil die Reflexion des Sendelichtes nicht in Richtung des Sensors erfolgt oder das reflektierte Licht von einem anderen Teil des Objektes abgeschattet wird.

Ausgehend von diesem Stand der Technik ist es Aufgabe der Erfindung, ein verbessertes System zur Absicherung bereitzustellen, mit dem Kosten eingespart werden können und das möglichst sicher arbeitet.

Diese Aufgabe wird gelöst durch ein System mit den Merkmalen des Anspruchs 1.

Das erfindungsgemäße System weist wenigstens einen Sensor mit einem Lichtempfänger auf, zur Detektion von Strahlung aus einem ersten fächerförmigen Überwachungsbereich, der sich in etwa parallel zu einer Fahrzeugtür auf einer Außenseite des Fahrzeugs erstreckt sowie zur Detektion von Strahlung aus einem zweiten fächerförmigen Überwachungsbereich, der gegenüber dem ersten Überwachungsbereich gekippt ist und einen Kippwinkel mit diesem einschließt. Weiter weist der Sensor des erfindungsgemäßen Systems einen Sender auf zur Aussendung von Sendelicht in den ersten und/oder zweiten Überwachungsbereich, wobei das in die Überwachungsbereiche abgelenkte Sendelicht Überwachungsebenen bildet, so dass das Sendelicht von etwaigen Objekten oder Personen in den Überwachungsebenen reflektiert bzw. remittiert wird und das reflektierte oder remittierte Licht mit dem Lichtempfänger des Sensors empfangen werden kann. Der Sensor ist als ein Laserscanner ausgebildet, der an sich bekannt ist und zuverlässig arbeitet. Verschiedene Ausführungsformen derartiger Laserscanner sind beispielsweise aus der DE 43 40 756 C2, DE 199 53 009 C2 oder aus der WO 96/34252 bekannt.

Der wesentliche Vorteil darin besteht, dass kein gesonderter Sender vorgesehen sein muss, der von einer Bedienperson auf dem Bahnsteig betätigt werden müsste. In dem erfindungsgemäßen System kann der Sensor autark arbeiten und es besteht auch keine Gefahr, dass Objekte im Überwachungsbereich nicht erfasst werden, weil das reflektierte Licht abgeschattet wäre, wie dies bei dem bekannten System möglich ist. Die Detektionssicherheit wird damit erhöht.

Dadurch dass das in die Überwachungsbereiche abgelenkte Sendelicht Überwachungsebenen bildet, ist eine vollständige Überwachung der Überwachungsbereiche gewährleistet.

Durch die Bildung zweier beabstandeter Überwachungsebenen, ist es auch möglich, Personen, die ein- und aussteigen zu zählen, da aufgrund des Abstandes der Überwachungsebenen der Detektionszeitpunkt eines Objektes in der jeweiligen Überwachungsebene beim Ein- und Ausstieg die Bewegungsrichtung angibt.

Vorteilhafterweise weist der Sensor einen Signalausgang auf, über den ein Signal in Abhängigkeit vom Vorhandensein eines Objektes in erster und/oder zweiter Überwachungsebene ausgebbar ist. Dieses Signal kann zur weiteren Auswertung an eine Zugsteuerung weitergegeben werden.

Damit die Sensoren des erfindungsgemäßen Systems möglichst unauffällig an der Außenseite des Fahrzeugs angebracht sind und damit die Personeneinstiegsöffnung vollständig überwacht werden kann, ist der Sensor vorteilhafterweise oberhalb der Personeneinstiegsöffnung angeordnet.

Um den Bereich zwischen einer Bahnsteigkante und der Fahrbahntrasse vollständig überwachen zu können, erstreckt sich die erste Überwachungsebene nach unten bis auf die Fahrbahntrasse. Die zweite Überwachungsebene, die gegenüber der ersten Überwachungsebene gekippt ist, erstreckt sich vorteilhaft bis auf den Bahnsteig, so dass auch Bereiche in einem gewissen Abstand von dem Fahrzeug bzw. den Fahrzeugtüren überwacht werden können, insbesondere Trittbretter, die zwischen dem Fahrzeug und dem Bahnsteig angeordnet sind und insbesondere die sich stets ergebende Lücke zwischen dem Bahnsteig und dem Trittbrett bzw. der Personeneinstiegsöffnung überwacht werden kann. Dazu ist es vorteilhaft, wenn der Kippwinkel der zweiten Überwachungsebene einstellbar, insbesondere einlernbar ist.

In Weiterbildung der Erfindung kann dem Sensor eine Auswerteeinheit zugeordnet sein, in der eine Vorauswertung der empfangenen Strahlung erfolgt.

In dieser Auswerteeinheit kann auch die vom Sensor gesehene Kontur in einer Überwachungsebene, insbesondere der Bahnsteig und/oder eine sich bei Halt des Zuges ausfahrende Trittstufe eingelernt werden, so dass der Sensor eine Referenzkontur abspeichern kann, die einer freien Überwachungsebene entspricht.

Zur Kosteneinsparung können dem Sensor mehrere Personeneinstiegsöffnungen zugeordnet sein, wobei die beiden Überwachungsebenen dann jeweils die mehreren Personeneinstiegsöffnungen überstreichen.

Alternativ können bei Vorhandensein von zwei beabstandeten Personeneinstiegsöffnungen ein erster Sensor im Bereich der ersten Öffnung angeordnet sein und ein zweiter Sensor im Bereich der zweiten Öffnung, wobei der erste Sensor die erste Überwachungsebene überwacht und der zweite Sensor die zweite, wobei beide Überwachungsebenen jeweils beide Personeneinstiegsöffnungen überstreichen. Auf diese Weise können die Sensoren einfacher ausgebildet sein, da sie jeweils nur eine Überwachungsebene erzeugen müssen.

Im Folgenden wird die Erfindung anhand eines Ausführungsbeispiels unter Bezugnahme auf die Zeichnung im Einzelnen erläutert. In der Zeichnung zeigen:
- Fig. 1: einen Eisenbahnwaggon mit dem erfindungsgemäßen System in der Frontansicht;
- Fig. 2: einen Eisenbahnwaggon mit dem erfindungsgemäßen System in der Seitenansicht.
- Fig. 3: Eine Prinzipdarstellung eines Laserscanners.

In dem in der Zeichnung dargestellten erfindungsgemäßen System 10 ist dieses an einem Eisenbahnwaggon 12 angeordnet. Prinzipiell ist dieses System 10 aber auch verwendbar für die verschiedensten Fahrzeuge zur Personenbeförderung, wie U-Bahnen, Busse und dergleichen. Das System 10 dient zur Absicherung von mit Türen 14 verschließbaren Personeneinstiegsöffnungen 16 an Fahrzeugen zur Personenbeförderung, insbesondere Schienenfahrzeugen 12.

In dem dargestellten Ausführungsbeispiel weist das System 10 zwei Sensoren 18 und 20 auf, die als Laserscanner ausgebildet sind, die grundsätzlich aus den bereits zitierten Schriften DE 43 40 756 C2, DE 199 53 009 C2 und WO 96/34252 bekannt sind.

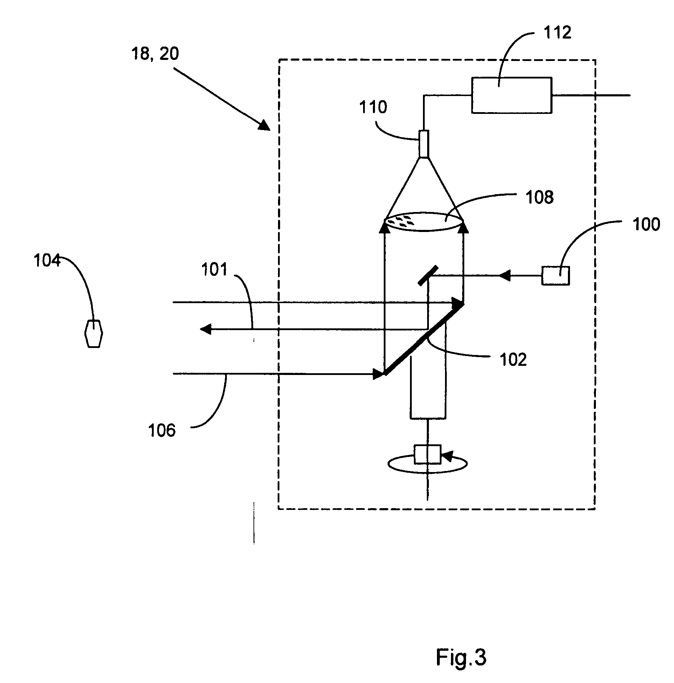

Ein typischer Laserscanner, wie er beispielsweise aus der genannten DE 43 40 756 C2 bekannt ist, ist in Figur 3 sehr schematisch dargestellt zur Erläuterung des grundsätzlichen Prinzips. In einem solchen Laserscanner 18, 20 ist ein Sender 100 zur Aussendung von Sendelicht 101 vorgesehen, das über einen Umlenkspiegel 102, der sich kontinuierlich dreht, in einen Überwachungsbereich gesandt wird. Der Überwachungsbereich hat somit eine fächerförmige Ausdehnung. Befindet sich ein Objekt 104 im Überwachungsbereich, wird das vom Objekt reflektierte Licht 106 auf dem gleichen Weg zurückgesandt und von der Umlenkeinheit 102 über eine Empfangsoptik 108 einem Empfänger 110 zugeführt. In der Regel arbeiten derartige Laserscanner mit kurzen Lichtimpulsen von wenigen ns, so dass über die Winkelstellung der Umlenkeinheit 102 zum Sende- und Empfangszeitpunkt und die Laufzeit des Lichtimpulses auf den Ort des Objektes 104 zurückgerechnet werden kann.

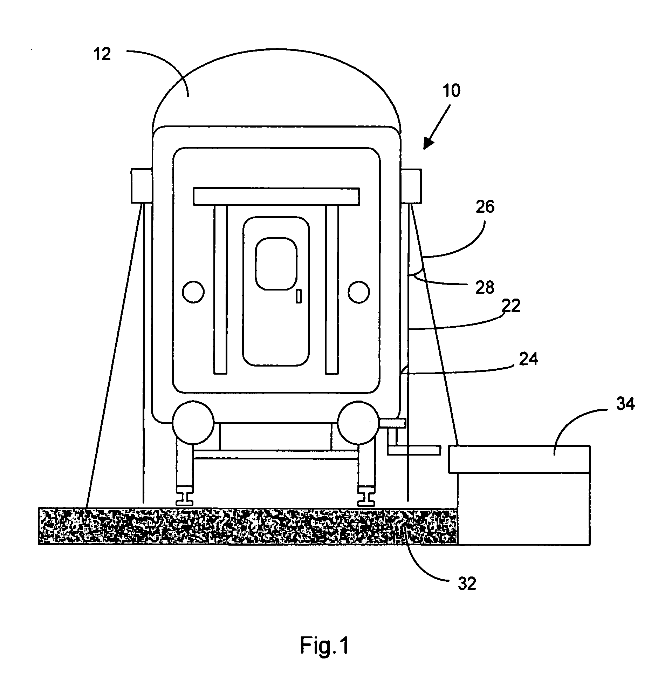

Auf diese Weise ist dem ersten Laserscanner 18 des erfindungsgemäßen Systems 10 eine fächerförmige Überwachungsebene 22 mit einem Öffnungswinkel 23 von in diesem Beispiel etwa 90° zugeordnet. Die Überwachungsebene 22 erstreckt sich in etwa parallel zu den Fahrzeugtüren 14 entlang einer Außenseite 24 des Fahrzeugs 12, wie dies in Figur 1 dargestellt ist.

Der zweite Laserscanner 20 spannt eine zweite fächerförmige Überwachungsebene 26 auf mit einem Öffnungswinkel 27, der in der dargestellten Anordnung ebenfalls etwa 90° beträgt. Die zweite Überwachungsebene 26 ist gegenüber der ersten Überwachungsebene 22 gekippt, wie in Figur 1 zu erkennen ist und schließt mit dieser einen Kippwinkel 28 ein. Der Kippwinkel 28 ist so gewählt, dass die zweite Überwachungsebene 26 gerade die Kante eines Bahnsteigs 34 erreicht. Vorteilhafterweise ist der Kippwinkel 28 einstellbar und von dem Laserscanner 20 einlernbar.

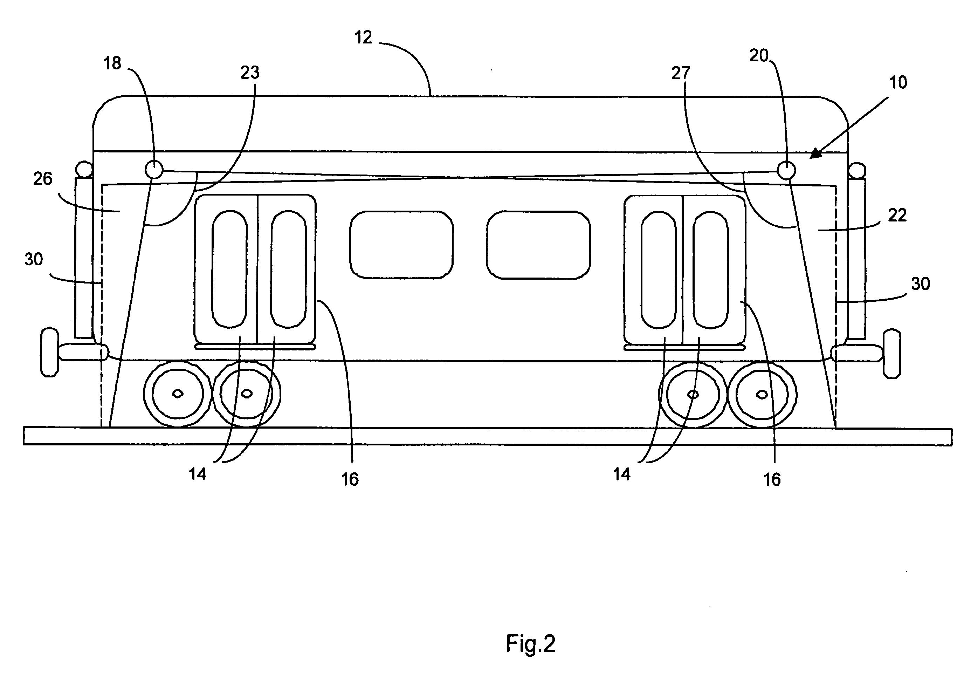

In dem dargestellten Ausführungsbeispiel sind an dem Eisenbahnwaggon 12 die beiden Laserscanner 18 und 20 oberhalb der Personeneinstiegsöffnungen 16 angeordnet, wobei jeder Sensor 18, 20 mit seiner zugehörigen Überwachungsebene 22, 26 beide Personeneinstiegsöffnungen 16 überstreicht. Dabei erstrecken sich die Überwachungsebenen nicht nur über die Personeneingangsöffnungen 16, sondern über die gesamte Seite des Waggons 12, wie dies in der Seitenansicht in Figur 2 zu erkennen ist. Dies hat den Vorteil, dass wenn der Waggon abgestellt ist, und das erfindungsgemäße System 10 weiterhin aktiv ist, die gesamte Fahrzeugseite überwacht werden kann, beispielsweise gegenüber Vandalismus durch Grafittisprayer oder dergleichen. Dabei sind die Laserscanner in der Lage, auch Farbsprühnebel zu erkennen. Die Reichweite der Laserscanner 18 und 20 muss dabei wenigstens in etwa der Waggonlänge entsprechen, wie dies durch gestrichelte Linien 30, die die Grenze des zu überwachenden Bereichs anzeigen, angedeutet sein soll.

Des Weiteren ist den Sensoren 18 und 20 jeweils eine oder eine gemeinsame Auswerteeinheit 112 zugeordnet, in der die vom Empfänger 110 empfangenen Lichtsignale verarbeitet werden können. Mittels der Auswerteeinheit kann beispielsweise eine Referenzabstandskontur eingelernt werden, die beispielsweise im Falle des Laserscanners 20 mit seiner Überwachungsebene 26 den Bahnsteig einschließen kann.

### Das erfindungsgemäße System 10 funktioniert wie folgt:

Während der Fahrt des Zuges kann das System inaktiv sein. Bei Halt des Zuges an einem Bahnsteig wird das System 10 aktiv und die Laserscanner 18 und 20 senden in der beschriebenen Weise Lichtimpulse in die jeweiligen Überwachungsebenen 22 und 26 aus. Auf diese Weise werden Objekte und Gegenstände, die sich durch die Überwachungsebenen 22 und 26 bewegen, insbesondere Personen, die ein- oder aussteigen, erfasst. Wenn zur Abfahrt des Zuges dann die Fahrzeugtüren 14 geschlossen werden, ist mit Hilfe des erfindungsgemäßen Systems feststellbar, ob Gegenstände in den Fahrzeugtüren eingeklemmt wurden, wobei die Auflösung der Laserscanner 18 und 20 so hoch sein kann, dass sogar Gegenstände von der Größe von eingeklemmten Hundeleinen erfasst werden. Wenn die Überwachungsebenen 22 und 26 frei sind, sich also keine Gegenstände an der Außenseite des Zuges und/oder auf der Bahnsteigkante in den Überwachungsebenen 22 und 26 befinden, kann von dem erfindungsgemäßen System beispielsweise über die Auswerteeinheit 112, ein Freigabesignal an den Zugführer gegeben werden. Auf diese Weise ist sichergestellt, dass keine Gefahr für Objekte und Personen besteht.

Dabei erstreckt sich die erste, parallel zur Waggonseite verlaufende Überwachungsebene 22 bis hinunter auf eine Fahrbahntrasse 32, so dass auch Objekte erkannt werden können, die zwischen den Waggon 12 und dem Bahnsteig 34 gelangt sind.

In dem beschriebenen Ausführungsbeispiel sind an einem Eisenbahnwaggon zwei Laserscanner 18, 20 angeordnet, die jeweils eine der beiden Überwachungsebenen aufspannen. Selbstverständlich ist die Erfindung nicht auf dieses konkrete Ausführungsbeispiel beschränkt, sondern es sind viele Variationen möglich, so können beispielsweise die beiden Überwachungsebenen durch einen einzigen Sensor erzeugt und überwacht werden, so dass an einem Waggon nur ein einziger Sensor auch zur Überwachung von mehreren Personeneinstiegsöffnungen vorgesehen sein kann. Auch können beispielsweise die beiden Laserscanner 18 und 20 nicht an entgegengesetzten Enden des Waggons 12 angeordnet sein, sondern beide könnten mittig am Waggon angeordnet sein, was beispielsweise eine Verkabelung und Verbindung mit einer Auswerteeinheit vereinfachen würde. Viele weitere Ausführungsformen und Anordnungen sind denkbar.

## Patentansprüche

1. System zur Absicherung von mit Türen verschließbaren Personeneinstiegsöffnungen an Fahrzeugen zur Personenbeförderung, insbesondere Schienenfahrzeugen, mit wenigstens einem Sensor mit einem Lichtempfänger zur Detektion von Strahlung aus einem ersten fächerförmigen Überwachungsbereich, der sich in etwa parallel zu einer Fahrzeugtür auf einer Außenseite des Fahrzeugs erstreckt und zur Detektion von Strahlung aus einem zweiten fächerförmigen Überwachungsbereich, der gegenüber dem ersten Überwachungsbereich gekippt ist und einen Kippwinkel mit diesem einschließt, **dadurch gekennzeichnet, dass** der Sensor (18, 20) einen Sender (100) umfasst zur Aussendung von Sendelicht (106) in den ersten und/oder zweiten Überwachungsbereich und dass das in die Überwachungsbereiche abgelenkte Sendelicht (106) Überwachungsebenen (22, 26) bildet und dass der Sensor als Laserscanner (18, 20) ausgebildet ist.

2. System nach einem der vorhergehenden Ansprüche, **dadurch gekennzeichnet, dass** der Sensor (18, 20) wenigstens einen Signalausgang aufweist, über den ein Signal in Abhängigkeit vom Vorhandensein eines Objektes (104) in erster und/oder zweiter Überwachungsebene (22, 26) ausgebbar ist.

3. System nach einem der vorhergehenden Ansprüche, **dadurch gekennzeichnet, dass** der Sensor (18, 20) oberhalb der Personeneinstiegsöffnung (16) angeordnet ist.

4. System nach einem der vorhergehenden Ansprüche, **dadurch gekennzeichnet, dass** die erste Überwachungsebene (22) sich nach unten bis auf eine Fahrbahntrasse (32) erstreckt.

5. System nach einem der vorhergehenden Ansprüche, **dadurch gekennzeichnet, dass** die zweite Überwachungsebene (26) sich bis auf einen Bahnsteig (34) erstreckt.

6. System nach einem der vorhergehenden Ansprüche, **dadurch gekennzeichnet, dass** dem Sensor (18, 20) eine Auswerteeinheit (112) zugeordnet ist.

7. System nach Anspruch 5 und 6, **dadurch gekennzeichnet, dass** die vom Sensor in einer Überwachungsebene gesehene Kontur einlernbar ist.

8. System nach einem der vorhergehenden Ansprüche, **dadurch gekennzeichnet, dass** der Kippwinkel (28) einstellbar oder einlernbar ist.

9. System nach einem der vorhergehenden Ansprüche, **dadurch gekennzeichnet, dass** dem Sensor mehrere Personeneinstiegsöffnungen zugeordnet sind, wobei die beiden Überwachungsebenen jeweils die mehreren Personeneinstiegsöffnungen überstreichen.

10. System nach einem der vorhergehenden Ansprüche, **dadurch gekennzeichnet, dass** bei Vorhandensein von zwei beabstandeten Personeneinstiegsöffnungen (16) ein erster Sensor (18) im Bereich der ersten Öffnung (16) angeordnet ist und ein zweiter Sensor (20) im Bereich der zweiten Öffnung (16) angeordnet ist und dem ersten Sensor (18) die erste Überwachungsebene (22) zugeordnet ist und dem zweiten Sensor (20) die zweite Überwachungsebene (26).

11. System nach einem der vorhergehenden Ansprüche, **dadurch gekennzeichnet, dass** die Überwachungsebenen (22, 26) nicht nur die Personeneingangsöffnungen (16) überstreichen, sondern eine ganze Fahrzeugseite (24).

## Claims

1. A system for securing passenger entry openings closable by doors on vehicles for passenger transport, in particular rail vehicles, comprising at least one sensor having a light receiver for the detection of radiation from a first fan-shaped monitored zone which extends approximately parallel to a vehicle door at an outer side of the vehicle and for the detection of radiation from a second fan-shaped monitored zone which is tilted with respect to the first monitored zone and includes a tilt angle therewith, **characterised in that** the sensor (18, 20) includes a transmitter (100) for the transmission of transmitted light (106) into the first and/or second monitored zones; and **in that** the transmitted light (106) deflected into the monitored zones forms monitored planes (22, 26); and **in that** the sensor is designed as a laser scanner.

2. A system in accordance with any one of the preceding claims, **characterised in that** the sensor (18, 20) has at least one signal output via which a signal can be output in dependence on the presence of an object (104) in the first and/or second monitored plane (22, 26).

3. A system in accordance with any one of the preceding claims, **characterised in that** the sensor (18, 20) is arranged above the passenger entry opening (16).

4. A system in accordance with any one of the preceding claims, **characterised in that** the first monitored plane (22) extends downwards to a roadway line (32).

5. A system in accordance with any one of the preceding claims, **characterised in that** the second monitored plane (26) extends to a railway platform (34).

6. A system in accordance with any one of the preceding claims, **characterised in that** an evaluation unit (112) is associated with the sensor (18, 20).

7. A system in accordance with claim 5 and claim 6, **characterised in that** the contour seen in a monitored plane by the sensor can be taught.

8. A system in accordance with any one of the preceding claims, **characterised in that** the tilt angle (28) can be set or taught.

9. A system in accordance with any one of the preceding claims, **characterised in that** a plurality of passenger entry openings are associated with the sensor, with the two monitored planes each sweeping over the plurality of passenger entry openings.

10. A system in accordance with any one of the preceding claims, **characterised in that**, on the presence of two spaced apart passenger entry openings (16), a first sensor (18) is arranged in the region of the first opening (16) and a second sensor (20) is arranged in the region of the second opening (16) and the first monitoring plane is associated with the first sensor (18) and the second monitored plane (26) is associated with the second sensor (20).

11. A system in accordance with any one of the preceding claims, **characterised in that** the monitored planes (22, 26) not only sweep over the passenger entry openings (16), but rather a whole vehicle side (24).

## Revendications

1. Système pour sécuriser des ouvertures d'entrée de personnes pouvant être fermées avec des portes sur des véhicules destinés au transport de personnes, en particulier des véhicules sur rails, comprenant au moins un capteur avec un récepteur de lumière pour la détection de rayonnement provenant d'une première zone de contrôle en forme d'éventail, qui s'étend à peu près parallèlement à une porte du véhicule sur un côté extérieur du véhicule et pour la détection de rayonnement provenant d'une seconde zone de contrôle en forme d'éventail, qui est basculée par rapport à la première zone de contrôle et forme un angle de basculement avec celle-ci, **caractérisé en ce que** le capteur (18, 20) comprend un émetteur (100) pour l'émission de lumière d'émission (106) dans la première et/ou la seconde zone de contrôle, **en ce que** la lumière d'émission (106) déviée dans les zones de contrôle forme des plans de contrôle (22, 26) et **en ce que** le capteur est conçu comme scanner laser (18, 20).

2. Système selon l'une quelconque des revendications précédentes, **caractérisé en ce que** le capteur (18, 20) présente au moins une sortie de signal, par laquelle un signal peut être sorti en fonction de la présence d'un objet (104) dans le premier et/ou le second plan de contrôle (22, 26).

3. Système selon l'une quelconque des revendications précédentes, **caractérisé en ce que** le capteur (18, 20) est disposé au-dessus de l'ouverture d'entrée de personnes (16).

4. Système selon l'une quelconque des revendications précédentes, **caractérisé en ce que** le premier plan de contrôle (22) s'étend vers le bas jusqu'à un tracé de voie (32).

5. Système selon l'une quelconque des revendications précédentes, **caractérisé en ce que** le deuxième plan de contrôle (26) s'étend jusqu'à un quai (34).

6. Système selon l'une quelconque des revendications précédentes, **caractérisé en ce qu'**une unité d'analyse (112) est attribuée au capteur (18, 20).

7. Système selon la revendication 5 et 6, **caractérisé en ce que** le contour, qui est vu par le capteur dans un plan de contrôle, peut être appris.

8. Système selon l'une quelconque des revendications précédentes, **caractérisé en ce que** l'angle de basculement (28) peut être réglé ou appris.

9. Système selon l'une quelconque des revendications précédentes, **caractérisé en ce que** plusieurs ouvertures d'entrée de personnes sont attribuées au capteur, les deux plans de contrôle passant chacun au-dessus des plusieurs ouvertures d'entrée de personnes.

10. Système selon l'une quelconque des revendications précédentes, **caractérisé en ce que**, en présence de deux ouvertures d'entrée de personnes (16) espacées, un premier capteur (18) est disposé dans la zone de la première ouverture (16) et un second capteur (20) est disposé dans la zone de la seconde ouverture (16) et le premier plan de contrôle (22) est attribué au premier capteur (18) et le second plan de contrôle (26) au second capteur (20).

11. Système selon l'une quelconque des revendications précédentes, **caractérisé en ce que** les plans de contrôle (22, 26) passent non seulement au-dessus des ouvertures d'entrée de personnes (16), mais aussi au-dessus d'un côté complet de véhicule (24).
